# EUROPEAN PATENT APPLICATION

(11) **EP 4 391 321 A1**
(43) Date of publication of application: **26.06.2024**
(21) Application number: 22215400.7
(22) Date of filing: 21.12.2022
(51) Int. Cl.: H02K 3/52

(54) **TERMINAL DEVICE FOR A STATOR, STATOR FOR AN ELECTRIC MACHINE, MANUFACTURING METHOD OF SAID STATOR**

(71) Applicant: Valeo eAutomotive Germany GmbH, 91056 Erlangen (DE)
(72) Inventor: THOMMANDULA, Venkata Siva Jagadish, 600130 Tamil Nadu (IN); GOPALAKRISHNAN, Rameshkumar, 600130 Valeo India Private Limited (IN); Dieterich, Sebastian, 97616 Bad Neustadt a.d.Saale (DE); Hofmann, Bianca, 97616 Bad Neustadt a.d.Saale (DE)
(74) Representative: Valeo Powertrain Systems

(57) **Abstract**

Terminal device (20) for a stator device (1) of an electric machine (101), the terminal device (20) comprising:
- an insulating body (21) comprising a base section (22) with a first side (23) and a second side (24) being opposite to the first side (23) and fixation sections (27a-f) extending from the insulating body (21) on the first side (23) into an extension direction;
- at least one first busbar assembly (25a, 25b); and
- a second busbar assembly (26); wherein
the at least one first busbar assembly (25a, 25b) is arranged between the base section (22) and the second busbar assembly (26) with respect to the extension direction, the at least one first busbar assembly (25a, 25b) and the second busbar assembly (26) being fastened to the insulating body (21) by the fixation sections (27a-f).

## Description

The present invention relates to a terminal device for a stator device. Further, the present invention relates to a stator device for an electric machine, a method for manufacturing a stator device and an electric machine for driving a vehicle.

In stator devices, a terminal device serves for holding a busbar assembly, which is supposed to connect stator windings with each other and/or with phase connectors supplying the stator winding with electric current. It is generally known, to dispose a terminal device with an insulating body, which fixes the busbar assembly by means of fixation sections, at one face side of the stator device, particularly at a winding head thereof.

However, conventional terminal devices are bulky and difficult to be manufactured, when more complex busbar assemblies are to be provided.

It is an object of the present invention to provide an improved possibility for fastening busbar assemblies to stator windings of a stator device for an electric machine.

According to the invention, this object is solved by a terminal device for a stator device of an electric machine, the terminal device comprising: an insulating body comprising a base section with a first side and a second side being opposite to the first side and fixation sections extending from the insulating body on the first side into an extension direction; at least one first busbar assembly; and a second busbar assembly; wherein the at least one first busbar assembly is arranged between the base section and the second busbar assembly with respect to the extension direction, the at least one first busbar assembly and the second busbar assembly being fastened to the insulating body by the fixation sections.

The terminal device for stator device of an electric machine comprises an insulating body. The insulating body comprises a base section. The base section has a first side and a second side. The second side is opposite to the first side. The insulating body further comprises fixation sections. The fixation sections extend from the insulating body on the first side into an extension direction. The terminal device further comprises at least one first busbar assembly and a second busbar assembly. The at least one first busbar assembly is arranged between the base section and the second busbar assembly with respect to the extension direction. The at least one first busbar assembly and the second busbar assembly are fastened to the insulating body by the fixation sections.

The present invention aims to reduce the space needed for arranging the first and the second busbar assemblies at the insulating body by disposing the at least one first busbar assembly between the base section and the second busbar assembly. In other words, the at least one first busbar assembly and the second busbar assembly are arranged in a stacked manner along the extension direction on the first side of the insulating body and fastened there by the fixation sections. Advantageously, the terminal device allows to save mounting space in the radial direction of the stator device and to dispose both busbar assemblies at a suitable position with respect to their intended connection to the stator windings of the stator device.

The insulating body may be made of an electrically insulating material, such as plastics. Preferably, the insulating body is made by injection molding. Each busbar assembly may comprise one or multiple busbars. Each busbar may be made of metal, preferably copper. Preferably, a cross-section of a respective busbar rectangular.

The extension direction may be considered as the direction being perpendicular to the first side, pointing away from the insulating body. Further, one or multiple first busbar assemblies may be provided. Therein, the multiple first busbar assemblies may be arranged in a common plane in parallel with the first side of the base section and/or such that they have the same to the first side of the base section.

Preferably, the fixation sections fasten the at least one first busbar assembly and the second busbar assembly by means of a snap-fit. Using a snap-fit provides a comfortable way to arrange the busbars assemblies in a desired position relative to the insulating body and to fasten them with low effort. Advantageously, fastening the busbar assemblies by means of a snap-fit can easily be implemented into an automated manufacturing process using robot actuators.

With respect to the terminal device according to the invention, it is further preferred that each fixation section fastens the first busbar assembly or one of the first busbar assemblies and the second busbar assembly. This means, that each fixation section provides a possibility to fasting the first busbar assembly as well as the second busbar assembly in their respective positions relative to the base section. Advantageously, multiple fastening functionalities are realized by a respective one of the fixation sections.

According to a preferred design of the terminal device according to the invention, each fixation section comprises a first fixation element being arranged in a plane parallel to the first side and at least one second fixation element being arranged in a plane parallel to the first side, the at least one second fixation element having a larger distance to the first side than the first fixation element. Consequently, each fixation section allows fastening the busbar assemblies at different distances from the first side of the base section by means of the first and second fixation elements. Particularly, the first fixation elements of the fixation sections fasten the first busbar assembly or one of the first busbar assemblies and the second fixation element fastens the second busbar assembly.

Preferably, each fixation section comprises a socket element extending from the first side into the extension direction, the first fixation element and the at least one second fixation element extending from the socket element. The socket element provides a stable support for the first and second fixation elements, particularly with regard to the above snap-fit functionality of the fixation sections.

According to a preferred design, each fixation section is elastically deformable such that the first fixation element and the at least one second fixation element move towards a direction perpendicular to the extension direction, when the first busbar assembly is pushed into the first fixation element, and to such that the at least one second fixation element moves towards the direction perpendicular to the extension direction, when the second busbar assembly is pushed into the fixation section. Such a design allows easy attaching the first busbar assembly to the fixation sections as a first step of a manufacturing sequence and the second busbar assembly as further step subsequent to attaching the first busbar assembly. Particularly, in a state, where the first busbar assembly is fastened by the first fixation elements, the second busbar assembly can be pushed into the fixation section without affecting the first fixation elements.

Each fixation section may be provided with two second fixation elements being spaced apart. Therein, the first fixation element of the fixation section may be arranged between the two second fixation elements. Using more second fixation elements than first fixation elements at a respective fixation section allows to fasten the second busbar assembly in a stable way in a larger distance from the first side of the base section than the first busbar assembly, particularly in specific designs, where the second busbar assembly has a smaller extend along the first side of the base section than the first busbar assembly.

Alternatively or additionally, each fixation element of the respective fixation section may comprise a detent, which partially covers an edge of the busbar assembly fastened by the respective fixation element. The detent may be configured to inhibit movement of the busbar assembly away from the base section and to engage with the edge of the busbar assembly.

According to a preferred design of the terminal device according to the invention, the base section forms a base plate. Alternatively or additionally, the base section may be formed integrally with the fixation sections. This allows producing the insulating body as a single piece, exemplarily by injection molding.

With regard to the terminal device according to the invention, it is further preferred that each busbar assembly comprises a busbar with a section extending in parallel with the base section. Preferably, the fixation sections fasten the busbar assemblies at the section extending in parallel with the base section. Further, the busbar may comprise two second sections extending into the extension direction section. The second sections may be arranged at both ends of the first section. The second sections may be configured to be connected to the stator windings of the stator device in an electrically conductive and mechanical manner. The connection may be realized by welding. The second sections may align flush with or exceed an edge of the first side of the base section.

A part of the second sections and a part of the connection elements may extend in parallel in the extension direction close to each other. This arrangement provides a connection surface, large enough to ensure electrical conduction in respect of manufacturing tolerances.

Furthermore, each busbar assembly may comprise a second busbar with a section extending in parallel with the base section, the section of the second busbar being surrounded by the section of the first busbar. This allows to realize even more complex busbar designs by the terminal device.

The fixation sections may form an arrangement being arranged along an arc. The arc may be circular or oval. In addition, the base section may extend in a ringshaped or a ring-sector-shaped manner along the arc. Further, the fixation sections may form a second arrangement being arranged along a second arc, the second arc being concentric with the first arc and having a smaller curvature radius than the first arc. The fixation sections of the first arrangement may fasten the first busbars and the fixation sections of the second arrangement may fasten the second busbars. This allows fastening the first and second busbars of a respective arrangement from opposite sides with respect to the busbar assemblies. Preferably, the detents of the first arrangement face the detents of the second arrangement.

Beneath the fixation sections of a first type described afore, the insulating body may further comprise fixation sections of a second type being configured to fasten only the at least one first busbar assembly and/or fixation sections of a third type being configured to fasten only the second busbar assembly. The fixation sections of the second type and/or of the third type may form part of the first arrangement and/or the second arrangement. Particularly, the fixation sections of the second type and/or third type are arranged along the respective arcs on both sides of fixations sections of the first type.

The insulating body may further comprise a plurality of guiding elements extending from the first side of the base section along the extension direction and being configured to support the busbar assembly against a retraction force provided by the fixation sections. Particularly, the guiding elements are disposed between the first busbar and the second busbar of the first busbar assembly. Thereby, sufficient air and creepage distances between the busbars may be realized as well.

According to a specific design of the terminal device according to the invention, two first busbar assemblies are provided. The two first busbar assemblies may be, at least partially, overlapped by the second busbar assembly.

According to the invention, the above object is further solved by a stator device for an electric machine, comprising a stator core with a longitudinal axis and an axial face side; a stator winding forming a winding head at the face side and connection elements extending out of the stator core into an axial direction with respect to the longitudinal axis, the connection elements extending further into the axial direction than the winding head; and a terminal device according to the invention; wherein the terminal device is arranged at the axial face side such that the second side of the base section faces the winding head, wherein the connection elements are electrically and mechanically connected to the busbar assemblies.

Particularly, the connection elements are electrically and mechanically connected to the second sections of the busbars of the busbar assemblies.

Preferably, the stator winding is a hairpin winding, the connection elements being members of the hairpin winding extending farther into the axial direction than the winding head.

The hairpin winding comprises segmented conductors. A segmented conductor is an electrical conductor with a rectangular cross-section. It can be bent as a U-pin and be stacked in two slots, or it can be straight as an I-pin and stacked in only one slot.

Additionally the hairpins may be stacked in layers in each of the slots. The second sections may be arranged to connect connection elements, which are extending of a radial inner layer of the stator core.

According to the invention, the above object is further solved by a method for manufacturing a stator device for an electric machine, the method comprising steps of: providing a stator, the stator comprising a stator core with a longitudinal axis and an axial face side, and a stator winding forming a winding head at the face side and connection elements extending out of the stator core into an axial direction with respect to the longitudinal axis, the connection elements extending further into the axial direction than the winding head; providing a terminal device according to the invention; arranging a terminal device at the axial face side such that the second side of the base section faces the winding head; and electrically and mechanically connecting the connection elements to the busbar assemblies.

Therein, the terminal device may be provided by the following steps: providing the insulating body; fastening the or a respective first busbar assembly to the insulating body by the fixation sections of the first type; and fastening the second busbar assembly to the insulating body in a state, where the first busbar assembly is fastened to the insulating body, by means of the fixation sections of the first type. Optionally, the or a respective busbar assembly may additionally be fastened by means of the fixation sections of the second type and/or the second busbar assembly may additionally be fastened by means of the fixation sections of the third type.

The above object is further solved by an electric machine for driving a vehicle, comprising a stator device according to the invention or obtained by a method according to the invention and a rotor being arranged rotatably with respect to the stator core.

The electric machine may be a, particularly permanently or electrically excited, synchronous motor or an induction motor.

The vehicle may comprise wheels. The electric machine may be configured to drive at least one of the wheels indirectly, e.g., via a gearbox, or directly, e.g., as a wheel hub motor. The vehicle may be a battery-electric vehicle (BEV), a vehicle supplied via a fuel cell or a hybrid vehicle, which further comprises a combustion engine.

Further details and advantages of the invention are disclosed in the following, wherein reference is made to the schematic drawings showing:
- Fig. 1: a principle drawing of an embodiment of a stator device according to the invention with an embodiment of a terminal device according to the invention;
- Fig. 2: a perspective view of the terminal device according to the embodiment;
- Fig. 3: a top view of the terminal device according to the embodiment;
- Fig. 4: a perspective view of one of the fixation sections according to the embodiment;
- Fig. 5: a front view of the fixation section shown in Fig. 4;
- Fig. 6: a side view of the fixation section shown in Fig. 4;
- Fig. 7: a top view of the fixation section shown in Fig. 4;
- Fig. 8: a detailed view of the insulating body and the first busbar assembly of the terminal device according to the embodiment;
- Fig. 9: a detailed view of the terminal device according to the embodiment;
- Fig. 10: an exploded view of the terminal device according to the embodiment; and
- Fig. 11: a principle drawing of a vehicle with an embodiment of electric machine according to the invention.

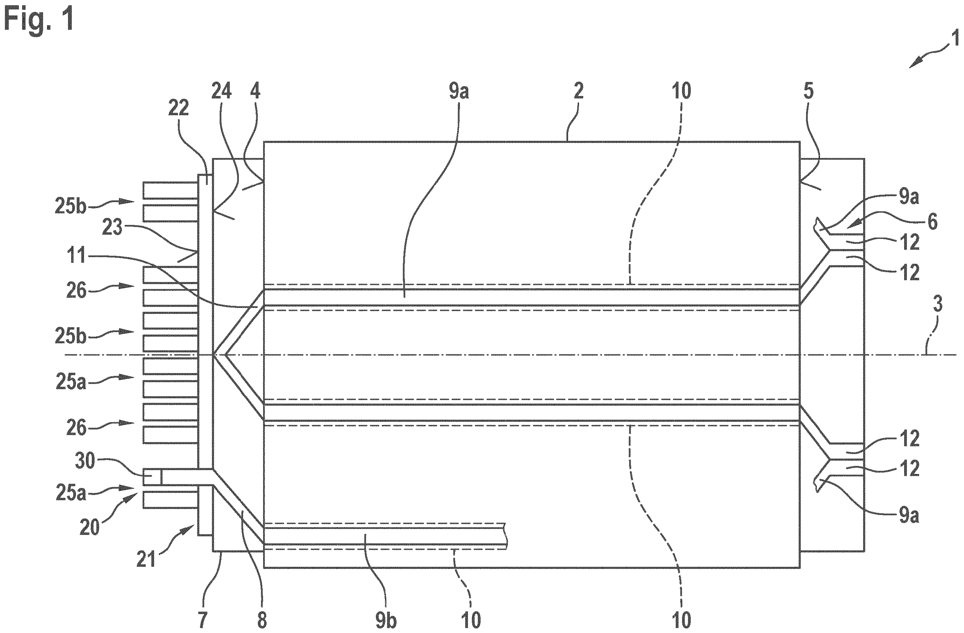

Fig. 1 is a principle drawing of an embodiment of a stator device 1 with an embodiment of a terminal device 20.

The stator device 1 further comprises a stator core 2 with a longitudinal axis 3. The stator core 2 has a first axial face side 4 and a second axial face side 5.In addition, the stator device 1 comprises a stator winding 6 forming a winding head 7 at the first axial face side 4. Further, the stator winding 6 forms connection elements 8 extending out of the stator core 2 into an axial direction with respect to the longitudinal axis 3 and extending farther into the axial direction than the winding head 7. In Fig. 1, only one connection element 8 is shown.

In the present embodiment, the stator winding 6 is exemplarily a hairpin winding, formed by a plurality of segmented conductors 9a, 9b disposed in slots 10 formed within the stator core 2. Segmented conductors 9a of a first type each have bending portion 11 at the first axial face side 4 and two connection portions 12 at the second axial face side 5. Thus, the segmented conductors 9a of the first type may be considered as U-pins. The segmented conductors 9b of a second type form the connection element 8 at the first axial face side 4 and have a corresponding connection portion 12 (not shown in Fig. 1) at the second axial face side 5. Thus, the segmented conductors 9b of the second type may be considered as I-pins. The connection portions 12 of the segmented conductors 9a, 9b are connected electrically and mechanically, e.g., by welding at the second axial face side 5 to form multiple current paths of the stator winding 6. Note that in Fig. 1 only three segmented conductors 9a of the first type, only one segmented conductor 9b of the second type and only three slots 10 are shown for reason of clarity.

The terminal device 20 comprises an insulating body 21 with a base section 22. The base section 22 has a first side 23 and a second side 24 being opposite to the first side 23. The terminal device 20 further comprises a first busbar assembly 25a and, optionally, a further first busbar assembly 25b. Besides, the terminal device 20 comprises a second busbar assembly 26. Note that the busbar assemblies 25a, 25b, 26 are only partially visible in Fig. 1.

With regard to the stator device 1, the terminal device 20 is arranged at the first axial face side 4 such that the second side 24 of the base section 22 faces the winding head 7. The connection elements 8 are electrically and mechanically connected to the busbar assemblies 25a, 25b, 26, wherein only one of these connections is depicted in Fig. 1 for reasons of clarity.

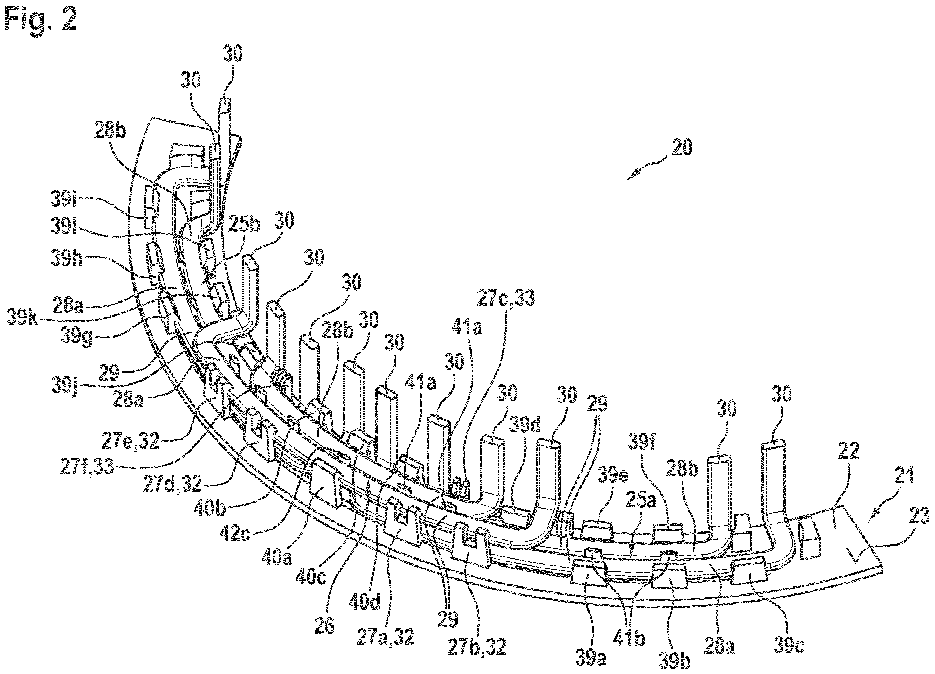

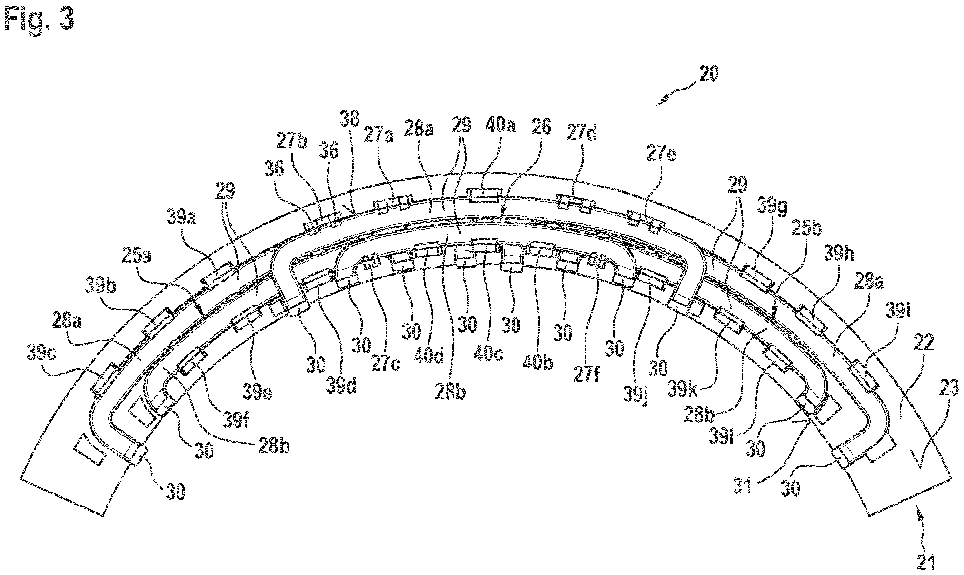

Fig. 2 and Fig. 3 show the terminal device 20 according to the embodiment, wherein Fig. 2 is a perspective view and Fig. 3 is a top view.

The insulating body 21 further comprises fixation sections 27a to 27f of a first type. Each fixation section 27a to 27f extends from the insulating body 21 on the first side 23 into an extension direction, which is in the present case a direction perpendicular to the first side 23. The first busbar assemblies 25a, 25b are each arranged between the base section 22 and the second busbar assembly 26 with respect to the extension direction. As can be seen, the first busbar assemblies 25a, 25b and the second busbar assembly are arranged in a stacked manner along the extension direction or along the axial direction with respect to the longitudinal axis 3, respectively. Each fixation section 27a to 27f fastens one of the first busbar assemblies 25a, 25b and the second busbar assembly 26. In detail, the first busbar assemblies 25a, 25b arranged side-by-side with a certain distance to the first side 23. The second busbar assembly 26 overlaps at least partially the first busbar assemblies 25a, 25b at a larger distance to the first side 23.

Optionally, each busbar assembly 25a, 25b, 26 comprises a first busbar 28a and a second busbar 28b, which are arranged such that the first busbar 28a surrounds the second busbar 28b in a radial direction regarding the longitudinal axis 3.

Each busbar 28a, 28b of a respective one of the busbar assemblies 25a, 25b, 26 comprises a first section 29 extending in parallel with the base section 22. The fixation sections 27a to 27f fasten the busbar assemblies 25a, 25b, 26 at the first sections of the busbars 28a, 28b. Further, the first sections 29 of the busbars 28a, 28b of a respective busbar assembly 25a, 25b, 26 are arc-shaped and align coaxially to each other. In particular, they have the shape of a circular arc.

Each busbar 28, 28b of a respective one of the busbar assemblies 25a, 25b, 26 further comprises two second sections 30, which extend at both ends of the first section 9 along the extension direction. The second sections 30 of a respective busbar 28a, 28b are aligned in parallel to each other. In addition, the second sections 30 of the busbars 28a, 28b of a respective busbar assembly 25a, 25b, 26 are aligned in parallel to each other. As can be seen in Fig. 3, the second sections 30 align substantially flush with an edge 31 of the first side 23 of the base section 22.

Therein, the second sections 30 are provided to be connected electrically and mechanically, e.g., by welding, to the connection elements 8 of the stator winding 6 (see Fig. 1).

In fact, the second sections 30 are arranged to connect connection elements 8 that are extending on a radial inner side of the stator core 2.

With regard to the arc-shaped first sections 29, the fixation sections 27a to 27f form a first arrangement 32 being arranged along a circular first arc and comprising fixations sections 27a, 27b, 27d, 27e. The first arrangement 32 fastens the first busbars 28a of the busbar assemblies 25a, 25b, 26. Further, the fixations sections 27a to 27f form a second arrangement 33 being arranged along a second circular arc having a smaller curvature radius than the first arc and comprises fixation sections 27c, 27f. The first and the second arc are aligned concentrically to each other. The second arrangement 33 fastens the second busbars 28b of the busbar assemblies 25a, 25b, 26.

In the present embodiment, the fixations sections 27a to 27f fasten the first busbar assemblies 25a, 25b and the second busbar assembly 26 by means of a snap-fit as will be described in detail in the following with regard to fixation section 27a being representative for the other fixation sections 27b to 27f:

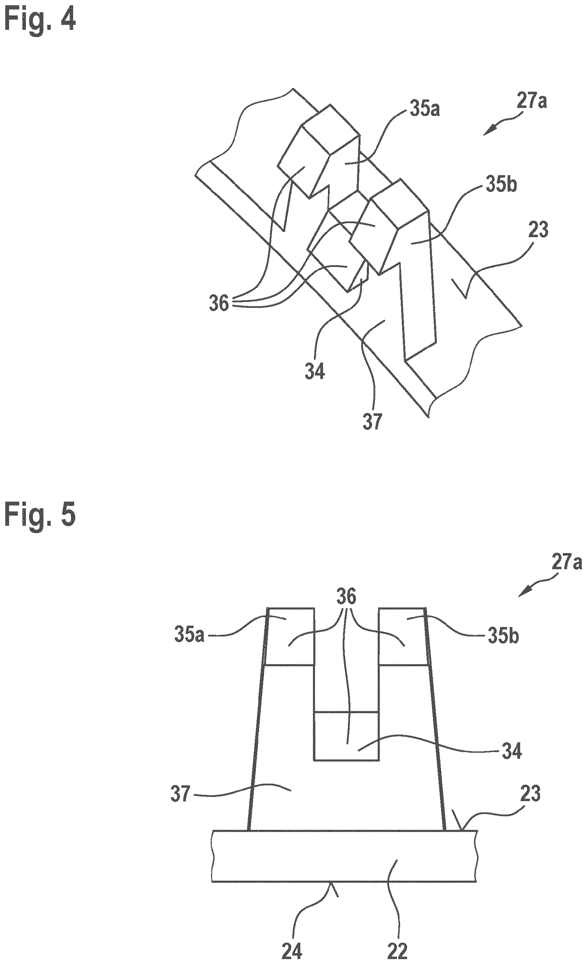

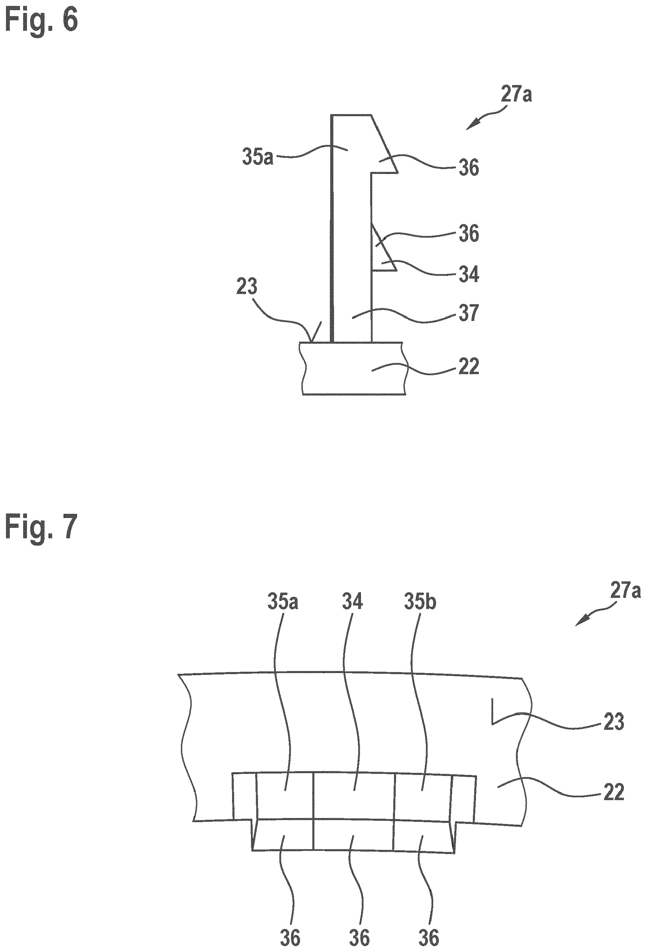

Fig. 4 to Fig. 7 show the fixation section 27a, wherein Fig. 4 is a perspective view, Fig. 5 is a front view, Fig. 6 is a side view and Fig. 7 is a top view.

The fixation section 27a comprises a first fixation element 34 being arranged in a plane parallel to the first side 23 and two second fixation element 35a, 35b being arranged in a plane parallel to the first side 23. The second fixation elements 35a, 35b have a larger distance to the first side 23 than the first fixation element 34 so that they assure the larger distance of the second busbar assembly 26 than the respective distances of the first busbar assemblies 25a, 25b. The two second fixation elements 35a, 35b are spaced apart so that the first fixation element 34 is arranged between them.

Further, each fixation element 34, 35a, 35b comprises a detent 36. As can be seen best in Fig. 3, the detent 36 of a respective fixation element 34, 35a, 35b covers an edge 38 of the busbar assembly 25a, 25b, 26 or busbar 28a, respectively, fastened by the respective fixation element 34, 35a, 35b.

In addition, the fixation section 27a comprises a socket element 37, from which the first and second fixation elements 34, 35a, 35b extend. The socket element 37 extends form the first side 23 into the extension direction. The fixation section 27a or the socket element 37, respectively, are formed integrally with base section 22.

Again with reference to Fig. 2 and Fig. 3, the insulating body 21 is further provided with multiple fixation sections 39a to 39I of a second type, which are each configured to fasten only one of the first busbar assemblies 25a, 25b, and multiple fixation sections of a third type 40a to 40d, which are configured to fasten only the second busbar assembly 26. Therein, six fixation sections 39a to 39f of the second type fasten the first busbar assembly 25a, six fixation sections 39g to 39I of the second type fasten the first busbar assembly 25b and four fixation sections of the third type 40a to 40d fasten the second busbar assembly 26.

Together with the fixations sections 27a, 27b, 27d, 27e of the first type, the fixation sections 39a to 39c, 39g to 39i of the second type and the fixation section 40a of the third type form the first arrangement 32 along the first arc. Together with the fixation sections 27c, 27f of the first type, the fixation sections 39d to 39f, 39j to 39I of the second type and the fixation sections 40b to 40d form the second arrangement 33 along the second arc.

Further, the insulating body 21 comprises a plurality of guiding elements 41a, of which only two are provided with reference numerals in Fig. 2. The guiding elements 41a extend from the first side 23 of the base section 22 into the extension direction and are configured support the busbar assemblies 25a, 25b, 26 against a retraction force provided by the fixation sections 27a to 27f of the first type. In addition, guiding elements 41b may be provided, which are configured to support one of the first busbar assemblies 25a, 25b against a retraction force provided by the fixation sections 39a to 39I of the second type. In addition, guiding elements 41c may be provided, which are configured to support the second busbar assembly 26 against a retraction force provided by the fixation sections 40a to 40d of the third type. The guiding elements 41a to 41c are disposed between the busbars 28a, 28b of the first busbar assemblies 25a, 25b.

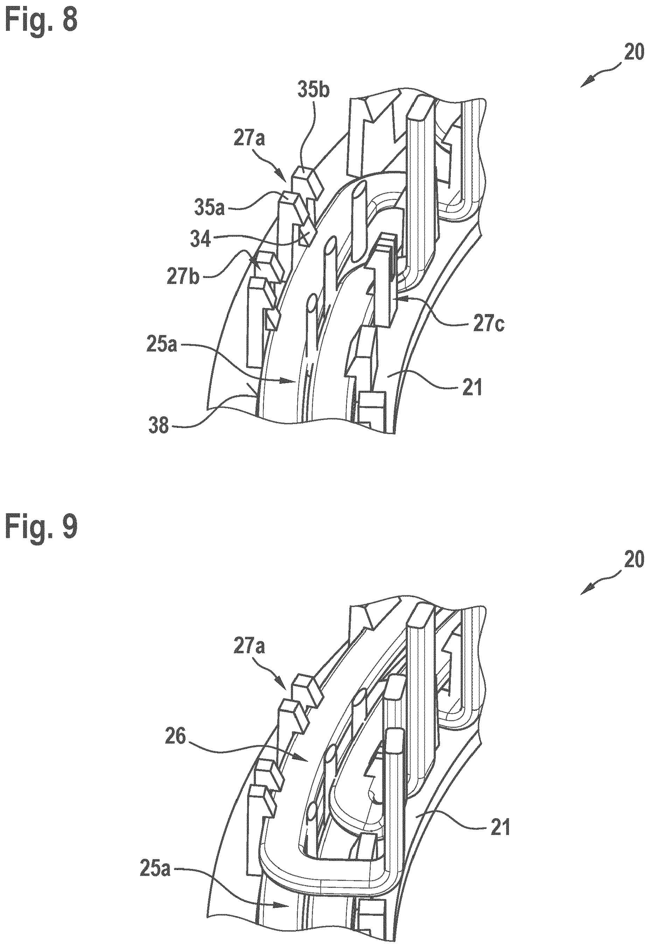

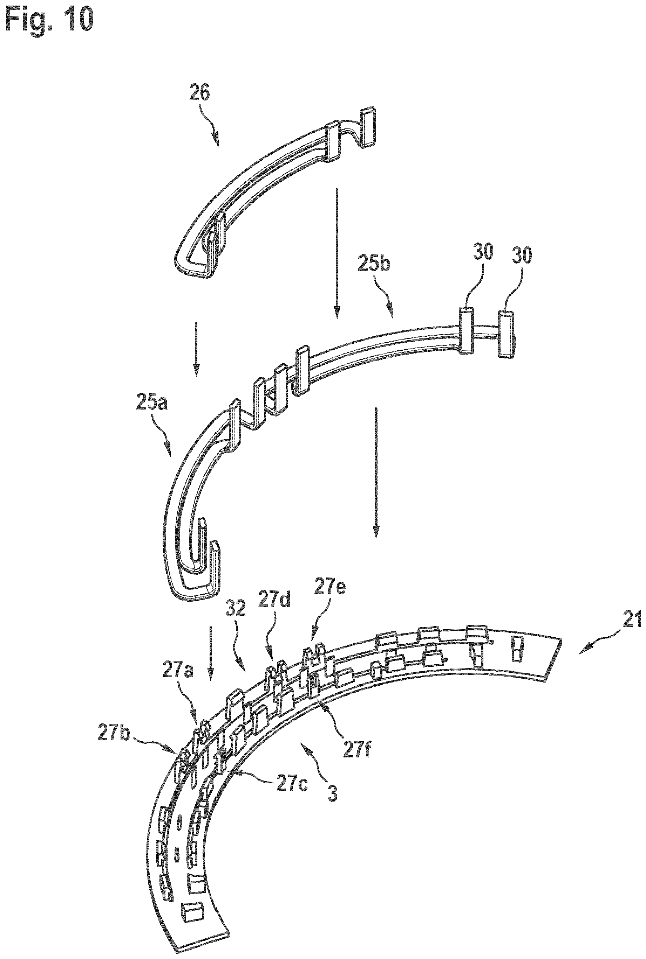

Fig. 8 is a detailed view of the insulating body 21 and the first busbar assembly 25a of the terminal device 20 according to the embodiment, i.e., with the second busbar assembly 26 being not shown. Fig. 9 is a corresponding detailed view of the terminal device 20 with the busbar assemblies 25a, 26. Fig. 10 is an exploded view of the terminal device 20 according to the embodiment.

Still being representative for the other fixation sections 27b to 27f of the first type, the fixation section 27a is elastically deformable such that the first fixation element 34 and the second fixation elements 35a, 35b move towards a direction perpendicular to the extension direction, when the first busbar assembly 25a is pushed into the fixation section 27a, and such that the second fixation elements 35a, 35b moves towards the direction perpendicular to the extension direction, when the second busbar assembly 26 is pushed into the fixation section 27a. I.e., in a state, where the first busbar assembly 25a is already mounted in the fixation section 27a, the first busbar assembly 25a and the first fixation element 34 fastening the first busbar assembly 25a remain substantially unaffected from pushing the second busbar assembly 26 into the fixation section 27a.

Further, the fixation sections 39a to 39I of the second type are elastically deformable such that they move towards the direction perpendicular to the extension direction, when the first busbar assemblies 25a, 25b are pushed thereinto, and the fixation sections 40a to 40d of the third type are elastically deformable such that they move toward the direction perpendicular to the extension direction, when the second busbar assembly 46 is pushed thereinto.

In the following, an embodiment of a method for manufacturing a stator device 1 is described with reference to Fig. 1 to Fig. 10.

The method comprises a step of providing a stator. The stator comprises a stator core 2 with a longitudinal axis 3 and an axial face side 4, and a stator winding 6 forming a winding head 7 at the face side 4 and connection elements 8 extending out of the stator core 2 into an axial direction with respect to the longitudinal axis 3. The connection elements 8 extend further into the axial direction than the winding head 7.

The method comprises a further step of providing a terminal device 20 according to embodiment described before. This step may comprise sub-steps of providing the insulating body 21; fastening the first busbar assemblies 25a, 25b to the insulating body 21 by the fixation sections 27a to 27f of the first type, and optionally by the fixations section 39a to 39I of the second type; and fastening the second busbar assembly 26 to the insulating body 21 in a state, where the first busbar assemblies 25a, 25b are already fastened to the insulating body 21, by means of the fixation sections 27a to 27f of the first type, and optionally by means of the fixation sections 40a to 40d of the third type.

According to a subsequent step of the method, the terminal device 20 is arranged at the axial face side 4 such that the second side 24 of the base section 22 faces the winding head 7. Thereafter, the method comprises a step of electrically and mechanically connecting the connection elements 8 to the busbar assemblies 25a, 25b, 26, e.g., by welding.

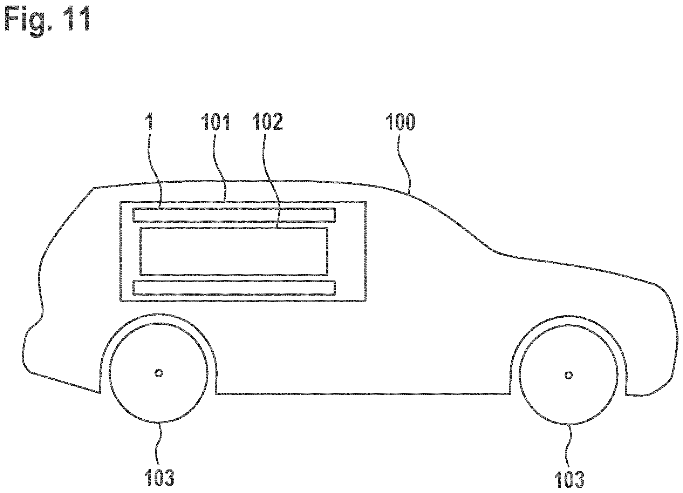

Fig. 11 is a principle drawing of a vehicle 100 with an embodiment of an electric machine 101.

The vehicle 100 comprises the electric machine 101, e.g., a permanently or electrically excited synchronous motor or an induction motor. The electric machine 101 comprises a stator device 1 according to the afore-mentioned embodiment or obtained by carrying out the embodiment of the method. Further, the electric machine 101 comprises a rotor 102. The rotor 102 is mounted rotatably around the longitudinal axis 3 within the stator core 2 (see Fig. 1).

Furthermore, the vehicle 100 comprises wheels 103. The electric machine 101 is configured to drive at least one of the wheels 103 indirectly, e.g., via a gearbox (not shown), or directly, e.g., as a wheel hub motor. The vehicle 100 may further comprise an axle (not shown) coupled with the wheel 103, the axle being directly or indirectly driven by the electric machine 101.

The vehicle 100 is a battery-electric vehicle (BEV), a vehicle supplied via a fuel cell or a hybrid vehicle, which further comprises a combustion engine (not shown).

## Claims

1. Terminal device (20) for a stator device (1) of an electric machine (101), the terminal device (20) comprising:
- an insulating body (21) comprising a base section (22) with a first side (23) and a second side (24) being opposite to the first side (23) and fixation sections (27a-f) extending from the insulating body (21) on the first side (23) into an extension direction;
- at least one first busbar assembly (25a, 25b); and
- a second busbar assembly (26); wherein
the at least one first busbar assembly (25a, 25b) is arranged between the base section (22) and the second busbar assembly (26) with respect to the extension direction, the at least one first busbar assembly (25a, 25b) and the second busbar assembly (26) being fastened to the insulating body (21) by the fixation sections (27a-f).

2. Terminal device (20) according to claim 1, wherein
- the fixation sections (27a-f) fasten the at least one first busbar assembly (25a, 25b) and the second busbar assembly (26) by means of a snap-fit and/or
- each fixation section (27a-f) fastens the first busbar assembly (25a, 25b) and the second busbar assembly (26).

3. Terminal device (20) according to any of the preceding claims, wherein each fixation section (27a-f) comprises a first fixation element (34) being arranged in a plane parallel to the first side (23) and at least one second fixation element (35a, 35b) being arranged in a plane parallel to the first side (23), the at least one second fixation element (35a, 35b) having a larger distance to the first side (23) than the first fixation element (34).

4. Terminal device (20) according to claim 3, wherein
each fixation section (27a-f) comprises a socket element (37) extending from the first side (23) into the extension direction, the first fixation element (34) and the at least one second fixation element (35a, 35b) extending away from the socket element (37).

5. Terminal device (20) according to claim 3 or 4, wherein
each fixation section (27a-f) is elastically deformable such that the first fixation element (34) and the at least one second fixation element (35a, 35b) move towards a direction perpendicular to the extension direction, when the at least first busbar assembly (25a, 25b) is pushed into the fixation section (27a-f), and such that the at least one second fixation element (35a, 35b) moves towards the direction perpendicular to the extension direction, when the second busbar assembly (26) is pushed into the fixation section (27a-f).

6. Terminal device (20) according to any of claims 3 to 5, wherein
- each fixation section (27a-f) is provided with two second fixation elements (35a, 35b) being spaced apart, the first fixation element (34) of the fixation section (27a-f) being arranged between the two second fixation elements (35a, 35b) and/or
- each fixation element (34, 35a, 35b) of a respective fixation section (27a-f) comprises a detent (36), which partially covers an edge (37) of the busbar assembly (25a, 25b 26) fastened by the respective fixation element (34, 35a, 35b).

7. Terminal device (20) according to any of the preceding claims,
the base section (22) forming a base plate and/or being formed integrally with the fixation sections (27a-f).

8. Terminal device (20) according to any of the preceding claims, wherein each busbar assembly (25a, 25b, 26) comprises a busbar (28a) with a section (29) extending in parallel with the base section (22).

9. Terminal device (20) according to claim 8, wherein
each busbar assembly (25a, 25b, 26) comprises a second busbar (28b) with a section (29) extending in parallel with the base section (22), the section (29) of the second busbar (28b) being surrounded by the section (29) of the first busbar (28a).

10. Terminal device (20) according to any of the preceding claims, wherein
the fixation sections (27a, 27b, 27d, 27e) form an arrangement (32) being arranged along a, particularly circular or oval, arc.

11. Terminal device (20) according to claim 10, when being dependent on claim 9 wherein
the fixation sections (27c, 27f) form a second arrangement (33) being arranged along a second arc, the second arc being concentric with the first arc and having a smaller curvature radius than the first arc, wherein the fixation sections (27a, 27b, 27d, 27e) of the first arrangement (32) fasten the first busbars (28a) and the fixation sections (27c, 27f) of the second arrangement (33) fasten the second busbars (28b).

12. Terminal device (20) according to any of the preceding claims, wherein
- two first busbar assemblies (25a, 25b) are provided being overlapped, at least partially, by the second busbar assembly (26) and/or
- the insulating body (21) comprises a plurality of guiding elements (41a) extending from the first side (23) of the base section (22) into the extension direction and being configured support the busbar assemblies (25a, 25b, 26) against a retraction force provided by the fixation sections (27a-f) and/or
- the insulating body (21) comprises fixation sections (39a-I) of a second type being configured to fasten only the at least one first busbar assembly (25a, 25b) and/or fixation sections (40a-d) of a third type being configured to fasten only the second busbar assembly (26).

13. Stator device (1) for an electric machine (101), comprising
- a stator core (2) with a longitudinal axis (3) and an axial face side (4);
- a stator winding (6) forming a winding head (7) at the face side (4) and connection elements (8) extending out of the stator core (2) into an axial direction with respect to the longitudinal axis (3), the connection elements (8) extending further into the axial direction than the winding head (7); and
- a terminal device (20) according to any of the preceding claims; wherein the terminal device (20) is arranged at the axial face side (4) such that the second side (24) of the base section (22) faces the winding head (7), wherein the connection elements (8) are electrically and mechanically connected to the busbar assemblies (25a, 25b, 26).

14. Method for manufacturing a stator device (1) for an electric machine (101), the method comprising steps of:
- providing a stator, the stator comprising a stator core (2) with a longitudinal axis (3) and an axial face side (4), and a stator winding (6) forming a winding head (7) at the face side (4) and connection elements (8) extending out of the stator core (2) into an axial direction with respect to the longitudinal axis (3), the connection elements (8) extending further into the axial direction than the winding head (7);
- providing a terminal device (20) according to any of claims 1 to 12;
- arranging the terminal device (20) at the axial face side (4) such that the second side (24) of the base section (22) faces the winding head (7); and
- electrically and mechanically connecting the connection elements (8) to the busbar assemblies (25a, 25b, 26).

15. Electric machine (101) for driving a vehicle (100), comprising
- a stator device (1) according to claim 13 or obtained by a method according to claim 14, and
- a rotor (102) being arranged rotatably with respect the stator core (2).
